# EUROPÄISCHE PATENTANMELDUNG

(11) **EP 4 591 717 A1**
(43) Veröffentlichungstag der Anmeldung: **30.07.2025**
(21) Anmeldenummer: 24153921.2
(22) Anmeldetag: 25.01.2024
(51) Int. Cl.: A23G 3/34, A23G 3/54

(54) **VERFAHREN ZUR HERSTELLUNG VON AUSGEFORMTEN LEBENSMITTELN**

(71) Anmelder: CAPOL GmbH, 25337 Elmshorn (DE)
(72) Erfinder: KHOURY, Amjad, 44023 Chagrin Falls OH (US); MASAKI, Gabriella, 37130 Gleiched (DE)
(74) Vertreter: Kuhn, Daniela

(57) **Zusammenfassung**

Die Erfindung betrifft ein Verfahren zur Herstellung von beschichteten ausgeformten Lebensmitteln, vorzugsweise Süßwaren, umfassend folgende Schritte:
I) Einbringen von Lebensmittelgrundmasse in formbarem Zustand in mindestens eine mit einem Trennmittel versehene Form;
II) Verfestigung oder Gelierung der Lebensmittelgrundmasse in der Form;
III) Entformung der geformten Lebensmittel, wobei ausgeformte Lebensmittel erhalten werden;
IV) zumindest teilweises Beschichten der Oberfläche der entformten Lebensmittel mit einem Beschichtungsmittel umfassend die folgenden Komponenten (A), (B) und (C)
- (A): 1 Gew.% bis 15 Gew.%, bezogen auf das Gesamtgewicht des Beschichtungsmittels, mindestens eine Stärke
- (B): 1 Gew.% bis 30 Gew.%, bezogen auf das Gesamtgewicht des Beschichtungsmittels, mindestens einen Filmbildner, der keine Stärke ist,
- (C): 50 Gew.% bis 98 Gew.%, bezogen auf das Gesamtgewicht des Beschichtungsmittels, Dispergier oder Lösemittel.

## Beschreibung

Die Erfindung betrifft ein Verfahren zur Herstellung von ausgeformten Lebensmitteln, vorzugsweise Süßwaren, die zumindest teilweise mit einer Beschichtung versehen sind. Die Erfindung betrifft ferner mit dem Verfahren hergestellte Lebensmittel, die Verwendung eines Beschichtungsmittels zur Beschichtung von ausgeformten Lebensmitteln sowie ein besonders für das Verfahren geeignetes Beschichtungsmittel.

Das Ausformen von Lebensmittelgrundmasse ist ein wichtiger Schritt in der Lebensmittelverarbeitung, der es ermöglicht, eine Vielzahl von Produkten mit unterschiedlichen Formen und Texturen herzustellen. Der Formungsschritt wird unter Verwendung von Formen durchgeführt. Es gibt zwei Haupttypen von Formen: Dauerformen und Verlorene Formen. Dauerformen sind Formen, die mindestens einen, in der Regel zahlreiche Formungsvorgänge überstehen, z. B. für Serienproduktion. Verlorene Formen werden dagegen nach dem Einbringen der Lebensmittelgrundmasse zerstört. Verlorene Formen können aus einem formbaren Rohmaterial (z.B. mit Bindemittel versetze Stärke) nach einem Modell erstellt werden.

Für Gummiprodukte, wie Gummibärchen erfolgt die Formgebung traditionell mit Verlorenen Formen in dem sogenannten Stärkeformprozess. Die Verlorene Form wird hier aus mit Bindemittel versetzem Stärkepulver (Formstärke) hergestellt, das durch Einbringen eines Modells zu einer Form geformt wurde.

Das Modell stellt das Positiv des herzustellenden Gummiprodukts dar. In die Form wird die Gummimasse als Lebensmittelgrundmasse gefüllt. Die Formstärke dient sowohl zur Formung der Gummimasse als auch zu ihrer Stabilisierung während des Abkühlens und Aushärtens. Nach dem Aushärten werden die geformten Gummiwaren aus den Formen entfernt (Entformung unter Erhalt der ausgeformten Gummiwaren), wobei die Formen zerstört werden (Verlorene Form) und die überschüssige Formstärke wird entfernt. In der Regel wird die Formstärke nach ihrer Verwendung aufbereitet, um sie erneut dem Prozess zuführen zu können. Bei der Aufbereitung werden meist folgende Schritte durchgeführt: Reinigung, Konditionierung (z.B. Trocknung, Zerkleinerung), Auffüllung und ständige Qualitätsprüfung der Formstärke. Der Stärkeformprozess ist vorteilhaft für Hersteller, bei denen die Wirtschaftlichkeit im Vordergrund steht, die hohe Mengen produzieren, bei denen es wenig Bedenken hinsichtlich Kreuzkontaminationen gibt und Produktwechsel selten sind.

WO9854978 A1 beschreibt ein Verfahren zur Herstellung von gelatinehaltigen Süßwarenartikeln in einem Stärkeformverfahren.

Auch stärkefreie Formverfahren sind bekannt und gewinnen an Bedeutung. Es gibt nämlich einen Trend für die Nahrungsergänzungsindustrie pharmazeutische Standards zu übernehmen, da die Pharmaunternehmen zunehmend weniger konventionelle Träger (z.B. Süßwaren) für ihre Wirkstoffzufuhr verwenden (z.B. mit Vitaminen versetzte Gummibärchen).

Bei stärkefreien Formverfahren wird die Formung der Lebensmittelgrundmasse in der Regel mit Dauerformen durchgeführt. Für die vorgenannten Produkte wird meist das stärkefreie Formen durchgeführt, da es eine Reihe von Vorteilen gegenüber der Stärkeformung aufweist. So sind die wirtschaftlichen und technischen Hürden für den Einstieg in stärkefreie Formenverfahren viel niedriger als beim Stärkeformen. Beispielsweise sind die Durchlaufgeschwindigkeiten kleiner, die Ausrüstungskosten meist niedriger und auch das notwendige technische Wissen zur Herstellung von Produkten auf einer stärkefreien Linie ist geringer als auf einer Stärkelinie. Dazu kommt, dass auch die Anzahl der Personen, die typischerweise benötigt werden, um das System zu betreiben, geringer ist. Durch das Eliminieren des Stärkeformprozesses entfällt ferner die Notwendigkeit des Stärkemanagements, was vorteilhaft ist, da das Stärkemanagement Fachwissen des Personals sowie Platz in der Produktion erfordert und Kosten verursacht.

DE69010820 T2 beschreibt ein stärkefreies Verfahren zur Herstellung eines Formlings durch Ablagern einer aufgeschmolzenen oder fließfähigen Masse von Produktbestandteilen in einer porösen, nicht aus Stärke bestehenden, hydrophilen polymeren Form, Gelieren oder Härten der fließfähigen Masse unter Absorption von Feuchtigkeit oder eines sonstigen Lösungsmittels in das poröse Polymer durch Dochtwirkung und Gewinnen des Formlings.

Obwohl stärkefreie Ausformverfahren einige Schlüsselprobleme lösen, bleiben sie nicht ohne eigene Probleme. Bei stärkefreien Ausformverfahren werden meist Formen aus beschichtetem oder unbeschichtetem Metall, Kunststoffen, oder Silikonen verwendet. Obwohl diese Materialien anfänglich einige Freisetzungs- bzw. Trenneigenschaften haben, sind diese Eigenschaften in der Regel unzureichend oder kurzlebig, was zur Notwendigkeit eines ölhaltigen und/oder wachshaltigen Trennmittels führt, um das Produkt zur weiteren Verarbeitung aus den Formen zu lösen.

Die in der Praxis hierfür derzeit verwendeten Trennmittel (meist pflanzliche Öle, Gemische von Wachsen oder Fetten und Wachsen mit pflanzlichen Ölen) hinterlassen jedoch in den für eine ausreichende Trennwirkung und Weiterverarbeitung erforderlichen Mengen häufig einen öligen Rückstand auf der Oberfläche der Lebensmittel, der Probleme bei Waagen und Verarbeitungsanlagen verursachen kann, in der Verpackung Rückstände hinterlässt und für die Verbraucher unansehnlich ist.

Aufgrund der zum Teil unansehnlichen Natur der Endprodukte durch die verwendeten Trennmittel ist es üblich bestimmte Nachbehandlungsschritte, insbesondere eine Ölentfernung, Zuckersandung, Trockenbeschichtung mit Stärke oder anderen Materialien (Zitrusfaser) durchzuführen. Diese Prozesse können zu einer gewissen Verbesserung der Verarbeitbarkeit und Optik führen, weisen jedoch Nachteile auf. So ist an der Zuckersandung von Nachteil, dass zusätzlicher Zucker auf das Produkt aufgetragen wird. An Trockenbeschichtungen ist nachteilig, dass Staub in den Produktionsprozess eingebracht wird. An der Ölentfernung ist nachteilig, dass sie technisch aufwändig ist. Es besteht deshalb weiterhin ein Bedarf nach verbesserten Mitteln für die Nachbehandlung.

WO2018187314 (A1) beschreibt eine Beschichtungszusammensetzung zur Eigenschaftsververbesserung von Substraten. Die Beschichtungszusammensetzung enthält ein Pektin und einen Nicht-Glycerin-Zuckeralkohol. Die Zusammensetzung kann auch einen Filmbildner enthalten, wie Hydroxypropylcellulose (HPC), Hydroxypropylmethylcellulose (HPMC) oder eine Kombination davon.

Der Erfindung liegt die Aufgabe zugrunde ein Verfahren bereitzustellen, mit dem die mit der Stärkeformung und den mit herkömmlichen Dauerformverfahren verbundenen Nachteile vermieden werden und mit dem auf einfache Art und Weise ausgeformte Lebensmittel hergestellt werden können, die eine ansehnliche Oberfläche haben und gut konfektioniert werden können. Insbesondere sollen die ausgeformten Lebensmittel gut voneinander trennbar sein aber dennoch keine ölige Oberfläche aufweisen.

Diese Aufgabe wird gelöst durch ein Verfahren zur Herstellung von beschichteten ausgeformten Lebensmitteln, vorzugsweise von beschichteten ausgeformten Süßwaren, umfassend folgende Schritte:
I) Einbringen von Lebensmittelgrundmasse in formbarem Zustand in mindestens eine mit einem Trennmittel versehene Form;
II) Verfestigung oder Gelierung der Lebensmittelgrundmasse in der Form zu geformten Lebensmitteln;
III) Entformung der geformten Lebensmittel;
IV) zumindest teilweises Beschichten der Oberfläche der ausgeformten Lebensmittel mit einem Beschichtungsmittel umfassend die folgenden Komponenten (A), (B) und (C)
   - (A): 1 Gew.% bis 15 Gew.%, vorzugsweise von 1 Gew.% bis 10 Gew.%, insbesondere von 1 Gew.% bis 8 Gew.%, bezogen auf das Gesamtgewicht des Beschichtungsmittels, mindestens eine Stärke, vorzugsweise ausgewählt aus einer natürlichen Stärke, einer physikalisch modifizierten Stärke und Gemischen hiervon;
   - (B): 0,05 Gew.% bis 30 Gew.%, vorzugsweise von 0,05 Gew.% bis 25 Gew.%, noch bevorzugter von 1 Gew.% bis 20 Gew.%, noch bevorzugter von 1 Gew.% bis 15 Gew.%, insbesondere von 3 Gew.% bis 12 Gew.%, bezogen auf das Gesamtgewicht des Beschichtungsmittels, mindestens einen Filmbildner, der keine Stärke ist,
   - (C): 50 Gew.% bis 98 Gew.%, vorzugsweise von 60 Gew.% bis 98 Gew.%, insbesondere von 60 Gew.% bis 80 Gew.%, bezogen auf das Gesamtgewicht des Beschichtungsmittels, Dispergier oder Lösemittel.

Die Schritte I) bis IV) werden nacheinander durchgeführt. Das Verfahren kann auch zusätzliche Verfahrensschritte umfassen.

Erfindungsgemäß wurde gefunden, dass es das erfindungsgemäße Verfahren ermöglicht die mit der Stärkeformung und dem Dauerformverfahren verbundenen Nachteile auszuräumen und auf einfache Art und Weise ausgeformte Lebensmittel herzustellen. Die ausgeformten Lebensmittel haben eine ansehnliche Oberfläche und können gut konfektioniert werden. Die mit dem erfindungsgemäßen Verfahren hergestellten Lebensmittel sind gut voneinander trennbar, weisen aber dennoch keine ölige Oberfläche auf.

In Schritt I erfolgt das Einbringen von Lebensmittelgrundmasse in formbarem Zustand in mindestens eine mit einem Trennmittel versehene Form.

Der Begriff Lebensmittelgrundmasse bezieht sich auf verfestigbare oder gelierbare Massen, die für die Herstellung von Lebensmitteln verwendet werden können. Eine bevorzugte Lebensmittelgrundmasse ist ausgewählt aus der Gruppe bestehend aus Gelatinemasse, Stärkemasse, Pektinmasse, Agar Agar Masse und Gemischen hiervon. Vorzugsweise weist die Lebensmittelgrundmasse Zucker, Glukosesirup, Zuckeralkohole, Farbstoffe und/oder Aromastoffe auf.

Vorzugsweise ist die Lebensmittelgrundmasse bei Raumtemperatur (20°C) verfestigbar oder gelierbar. Weiter bevorzugt ist die Lebensmittelgrundmasse bei Raumtemperatur (20°C) in weniger als 5 Tagen, vorzugsweise in weniger als 3 Tagen verfestigbar oder gelierbar. Weiter bevorzugt beträgt der Trockensubstanzgehalt der Lebensmittelgrundmasse 50 Gew.% bis 90 Gew.%, noch bevorzugter 60 Gew.% bis 80 Gew.%.

Der Begriff "Form" ist erfindungsgemäß im herkömmlichen Sinne zu verstehen. So ist eine Form ein ausreichend festes Werkzeug, mit der Lebensmittelgrundmasse als formbares Rohmaterial zu einer gewünschten Geometrie umgeformt werden kann. Mit der Form kann somit die gewünschte physische Struktur oder Gestalt auf die Lebensmittelmasse übertragen werden. Die Form bildet zumindest zum Teil das Negativ der Außenform für das herzustellende geformte Lebensmittel. Sie kann verschiedene Gestalten und Größen haben, abhängig von dem gewünschten Endprodukt.

Vorzugsweise ist das erfindungsgemäße Verfahren ein stärkefreies Formgebungsverfahren. Mithin wird das Formen der Lebensmittelgrundmasse vorzugsweise nicht in einer Verlorenen Form aus Formstärke durchgeführt. Formstärke ist dabei Stärke, die so konditioniert, beispielsweise mit Bindemitteln versetzt ist, dass sie eine ausreichende Formstabilität aufweist, um im Stärkeformprozess eingesetzt werden zu können. Erfindungsgemäß bevorzugt ist die Form mithin keine Stärke.

Ebenfalls bevorzugt ist die Form eine Dauerform, d.h. eine Form, die mindestens einen, vorzugsweise mindestens zwei, insbesondere mindestens 5 Formvorgänge übersteht. Die Form kann jedoch auch eine verlorene Form sein d.h. eine Form, die nur für einen Formvorgang eingesetzt wird, sofern sie keine Stärke ist. Verlorene Formen werden bei oder nach der Entformung zerstört.

Besonders bevorzugte Formen enthalten beschichtetes oder unbeschichtetes Metall, Kunststoffe, insbesondere Silikone. Insbesondere bestehen die bevorzugten Formen aus den vorgenannten Materialien.

Die Form ist erfindungsgemäß mit einem Trennmittel versehen. In einer Auführungsform weist das Trennmittel mindestens ein Öl, vorzugsweise mindestens ein pflanzliches Öl und/oder mindestens ein Wachs optional im Gemisch mit mindestens einem Fett auf.

Öle sind organische Flüssigkeiten, die sich nicht mit Wasser mischen lassen. Öle weisen eine höhere Viskosität auf als Wasser. Sie können pflanzlichen, tierischen oder mineralischen Ursprungs sein. In der Regel sind Öle bei Raumtemperatur (20°C) flüssig. Bevorzugt sind Öle pflanzlichen Ursprungs. Ebenfalls bevorzugte Öle sind MCT (Medium-chain triglycerides)-Öl, Sonnenblumenöl, Rapsöl, Distelöl, Sojaöl und/oder Kokosöl.

Wachse sind Stoffe, die bei 20 °C knetbar, fest bis brüchig hart sind, eine grobe bis feinkristalline Struktur aufweisen, farblich durchscheinend bis opak, aber nicht glasartig sind, über 40 °C ohne Zersetzung schmelzen. In der Regel sind Wachse wenig oberhalb des Schmelzpunktes leicht flüssig (wenig viskos), weisen eine temperaturabhängige Konsistenz auf und sind unter leichtem Druck polierbar. Bevorzugte Wachse sind Carnaubawachs, Bienenwachs, Candelillawachs und/oder mikrokristallines Wachs.

Bevorzugt weist das Trennmittel MCT (Medium-chain triglycerides)-Öl, Sonnenblumenöl, Rapsöl, Distelöl, Sojaöl, Kokosöl, Carnaubawachs, Bienenwachs, Candelillawachs und/oder mikrokristallines Wachs auf.

Das Trennmittel kann auch ein Fett, vorzugsweise ausgewählt aus Palmfett, Rapsfett und/oder Kokosfett enthalten.

In Schritt II erfolgt die Verfestigung oder Gelierung der Lebensmittelgrundmasse in der Form zu geformten Lebensmitteln. Bevorzugt erfolgt die Verfestigung oder Gelierung bei Temperaturen unter 25°C. Weiter bevorzugt erfolgt die Verfestigung oder Gelierung innerhalb von weniger als 5 Tagen, beispielsweise innerhalb von 1 bis 5 Tagen, vorzugsweise innerhalb von weniger als 3 Tagen, beispielsweise innerhalb von 1 bis 3 Tagen.

In Schritt III erfolgt die Entformung der geformten Lebensmittel. Hierbei werden ausgeformte Lebensmittel erhalten. Ausgeformte Lebensmittel sind mithin Lebensmittel, die durch Formen von Lebensmittelgrundmasse in einer Form und anschließende Verfestigung oder Gelierung gefolgt von Enformung erhalten werden können. Bei der Entformung findet das Lösen aus der Form statt. Die Entformung kann manuell und/oder maschinell durchgeführt werden.

In Schritt IV) erfolgt das zumindest teilweise Beschichten der Oberfläche der geformten Lebensmittel mit einem Beschichtungsmittel umfassend die folgenden Komponenten (A), (B) und (C)
- (A): 1 Gew.% bis 15 Gew.%, vorzugsweise von 1 Gew.% bis 10 Gew.%, insbesondere von 1 Gew.% bis 8 Gew.%, bezogen auf das Gesamtgewicht des Beschichtungsmittels, mindestens eine Stärke, vorzugsweise ausgewählt aus einer natürlichen Stärke, einer physikalisch modifizierten Stärke und Gemischen hiervon;
- (B): 0,05 Gew.% bis 30 Gew.%, vorzugsweise von 0,05 Gew.% bis 25 Gew.%, noch bevorzugter von 1 Gew.% bis 20 Gew.%, noch bevorzugter von 1 Gew.% bis 15 Gew.%, insbesondere von 3 Gew.% bis 12 Gew.%, bezogen auf das Gesamtgewicht des Beschichtungsmittels, mindestens einen Filmbildner, der keine Stärke ist,
- (C): 50 Gew.% bis 98 Gew.%, vorzugsweise von 60 Gew.% bis 98 Gew.%, insbesondere von 60 Gew.% bis 80 Gew.%, bezogen auf das Gesamtgewicht des Beschichtungsmittels, Dispergier oder Lösemittel.

In einer bevorzugten Ausführungsform erfolgt das Beschichten in einer Dragiertrommel oder durch Sprühen, wobei das Beschichtungsmittel in Form von Tropfen aufgebracht wird.

Das Beschichten erfolgt derart, dass die Oberfläche der ausgeformten Lebensmittel zumindest teilweise beschichtet wird. Vorzugsweise werden mindestens 60%, noch bevorzugter mindestens 80%, noch bevorzugter mindestens 90% der Oberfläche der ausgeformten Lebensmittel beschichtet. Besonders bevorzugt wird die gesamte Oberfläche der ausgeformten Lebensmittel beschichtet.

### Stärke (A)

Erfindungsgemäß weist das Beschichtungsmittel mindestens eine Stärke als Komponente (A) auf. Bevorzugt ist die Stärke ausgewählt aus einer natürlichen Stärke, einer physikalisch modifizierten Stärke und Gemischen hiervon. Es hat sich nämlich in praktischen Versuchen gezeigt, dass natürliche Stärke und/oder physikalisch modifizierte Stärke besonders gut Feuchtigkeit aus dem ausgeformten Lebensmittel aufnehmen kann. Hierdurch kann ein Abtrocknen des Lebensmittels verbessert werden. Besonders bevorzugt ist natürliche Stärke. Vorteilhaft an der Verwendung von natürlicher Stärke ist auch, dass sie reichlich vorhanden und als biobasiertes polymeres Material nachhaltig und biologisch abbaubar ist. Besonders bevorzugt ist die Stärke Tapiokastärke.

Natürliche Stärke, auch als native Stärke bekannt, ist ein organisches, makromolekulares Polysaccharid, das zu den Kohlenhydraten zählt. Die chemische Grundformel lautet (C₆H₁₀O₅)ₙ. Natürliche Stärke ist verschieden von modifizierter Stärke und wird von Pflanzen gebildet, beispielsweise von Getreide. Ein Stärkemolekül besteht aus vielen Zuckermolekülen (Glucose), die miteinander verknüpft sind. Natürliche Stärke enthält meist zu 20-30 Gew.% Amylose und 70-80 Gew.% Amylopektin.

Die Stärke (Komponente A) kann auch modifizierte Stärke sein. Modifizierte Stärke ist eine Art von Stärke, die durch physikalische, enzymatische oder chemische Verfahren verändert wurde. Die Kornstruktur und andere wesentliche Eigenschaften bleiben nach der Modifikation erhalten. Die Verwendung von modifizierten Stärken ist für die Herstellung von bestimmten Lebensmitteln vorteilhaft, da sie eine besonders gute Hitzestabilität, Säurestabilität, Scherstabilität und/oder ein sehr gutes Gefrier- und Auftauverhalten aufweisen kann.

Bevorzugte modifizierte Stärke ist ausgewählt aus säurebehandelter Stärke, alkalisch modifizierter Stärke, oxidierter Stärke, Stärkeacetat, Hydroxypropylstärke, Stärkenatriumoctenylsuccinat, Octenylbernsteinsäureanhydrid, enzymatisch modifizierter Stärke, physikalisch modifizierter Stärke und Gemischen hiervon.

Bevorzugte modifizierte Stärke ist ausgewählt aus alkalisch modifizierter Stärke, oxidierter Stärke, Stärkeacetat, Hydroxypropylstärke, Stärkenatriumoctenylsuccinat, Octenylbernsteinsäureanhydrid, enzymatisch modifizierter Stärke, physikalisch modifizierter Stärke und Gemischen hiervon.

Besonders bevorzugte modifizierte Stärke ist physikalisch modifizierte Stärke. Physikalisch modifizierte Stärken sind Stärkeerzeugnisse, die durch physikalische Verfahren wie Hitzebehandlung aus natürlicher Stärke gewonnen werden. Diese Stärken zeichnen sich durch eine besonders gute Hitzestabilität, Säurestabilität, Scherstabilität und/oder ein besseres Gefrier- und Auftauverhalten aus. Physikalisch modifizierte Stärke ist lediglich durch physikalische Verfahren wie Hitzebehandlung modifiziert und nicht zusätzlich durch enzymatische oder chemische Verfahren.

Säurebehandelte Stärke wird durch Reaktion von Stärke mit Säuren wie Salzsäure, Phosphorsäure oder Schwefelsäure hergestellt. Alkalisch modifizierte Stärke wird durch Reaktion von Stärke mit Laugen wie Natronlauge oder Kalilauge hergestellt. Oxidierte Stärke wird durch Oxidation von Stärke, zum Beispiel mit Natriumhypochlorit hergestellt. Stärkeacetat kann hergestellt werden durch Reaktion von Stärke mit Essigsäureanhydrid oder Veresterung mit Essigsäure. Hydroxypropylstärke kann hergestellt werden durch Reaktion von Stärke mit Propylenoxid. Stärkenatriumoctenylsuccinat kann hergestellt werden durch Reaktion von Stärke mit Octenylbernsteinsäureanhydrid. Enzymatisch modifizierte Stärke ist eine Art von Stärke, die durch den Einsatz von Enzymen verändert wurde. Diese Enzyme, wie zum Beispiel α-Amylase, β-Amylase und entzweigende Enzyme, können die chemische Struktur der Stärke optimieren. Die enzymatische Modifikation kann dazu beitragen, die Eigenschaften der Stärke zu verbessern, um sie für spezifische Anwendungen geeigneter zu machen. Beispielsweise kann die enzymatische Modifikation dazu beitragen, die Löslichkeit der Stärke zu erhöhen, ihre Textur zu verändern oder ihre Verdickungseigenschaften zu verbessern.

Die Stärke (Komponente A) kann auch ein Gemisch aus natürlicher und modifizierter Stärke sein.

In einer Ausführungsform ist die Stärke (Komponente A) ausgewählt aus natürlicher Stärke, modifizierter Stärke, insbesondere physikalisch modifizierter Stärke und Gemischen hiervon.

In einer bevorzugten Ausführungsform der Erfindung beträgt der Anteil an Stärke ausgewählt aus einer natürlichen Stärke, einer physikalisch modifizierten Stärke und Gemischen hiervon bezogen auf das Gesamtgewicht des Beschichtungsmittels von 1 Gew.% bis 15 Gew.%, vorzugsweise von 1 Gew.% bis 10 Gew.%, insbesondere von 1 Gew.% bis 8 Gew.%, jeweils bezogen auf das Gesamtgewicht des Beschichtungsmittels.

In einer weiteren bevorzugten Ausführungsform der Erfindung beträgt der Anteil an natürlicher Stärke bezogen auf das Gesamtgewicht des Beschichtungsmittels von 1 Gew.% bis 15 Gew.%, vorzugsweise von 1 Gew.% bis 10 Gew.%, insbesondere von 1 Gew.% bis 8 Gew.% jeweils bezogen auf das Gesamtgewicht des Beschichtungsmittels.

### Filmbildner (B)

Erfindungsgemäß weist das Beschichtungsmittel mindestens einen Filmbildner als Komponente (B) auf, der keine Stärke ist. Filmbildner sind Stoffe, die in einem Beschichtungsmittel für das Zustandekommen eines zusammenhängenden Films sorgen können. Die Verwendung von Filmbildnern ist vorteilhaft, da sie die Qualität, Haltbarkeit und das Aussehen der Lebensmittel verbessern. Da der Filmbildner erfindungsgemäß keine Stärke ist, kann er von der Komponente (A) unterschieden werden.

Bevorzugte Filmbildner sind ausgewählt aus der Gruppe bestehend aus Proteinen, bevorzugt pflanzlichen Proteinen, insbesondere Zein, Wachsen, bevorzugt Bienenwachs und Carnaubawachs, Harzen, bevorzugt Schellack, Polysacchariden, bevorzugt Gummi arabicum, Pektinen, Celluloseethern und Gemischen hiervon.

Bevorzugte Celluloseether sind Ethylcellulose, Methylcellulose, Methylethylcellulose, Hydroxypropylcellulose, Hydroxypropylmethylcellulose, Carboxymethylcellulose (CMC), Celluloseacetat und Gemische hiervon. Bienenwachs und Carnaubawachs haben den Vorteil, dass sie den Lebensmitteln Glanz verleihen und als Feuchtigkeitsbarriere dienen. Harze können Süßwaren wie Schokoladendragees und Bonbons einen glänzenden Überzug verleihen sowie Schutz gegen Feuchtigkeit gewähren. Polysaccharide haben den Vorteil, dass sie Lebensmitteln eine glänzende Oberfläche verleihen und die Feuchtigkeitsaufnahme kontrollieren können. Vorteilhaft an der Verwendung von Celluloseethern ist, dass sie auf der Oberfläche der Lebensmittel eine besonders effiziente Schutzschicht ausbilden, wodurch die Lebensmittel vor Austrocknung und äußeren Einflüssen geschützt werden können.

Besonders bevorzugte Filmbildner sind ausgewählt aus der Gruppe bestehend aus Proteinen, bevorzugt Zein, Harzen, bevorzugt Schellack, Polysacchariden, bevorzugt Gummi arabicum, Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

Noch weiter bevorzugte Filmbildner sind ausgewählt aus der Gruppe bestehend aus Polysacchariden, bevorzugt Gummi arabicum, Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon. Besonders bevorzugt sind dabei Celluloseether.

Noch weiter bevorzugte Filmbildner sind Celluloseether ausgewählt aus der Gruppe bestehend aus Ethylcellulose, Methylcellulose, Methylethylcellulose, Hydroxypropylcellulose, Hydroxypropylmethylcellulose, Carboxymethylcellulose (CMC) und Gemischen hiervon. Vorteilhaft an der Verwendung von Celluloseethern ist, dass sie auf der Oberfläche der Lebensmittel eine besonders effiziente Schutzschicht ausbilden können, wodurch die Lebensmittel vor Austrocknung und äußeren Einflüssen geschützt werden.

Ganz besonders bevorzugte Filmbildner sind Gemische, die mindestens zwei, vorzugsweise mindestens drei Celluloseether, vorzugsweise ausgewählt aus der Gruppe bestehend aus Ethylcellulose, Methylcellulose, Methylethylcellulose, Hydroxypropylcellulose, Hydroxypropylmethylcellulose und Carboxymethylcellulose (CMC) enthalten.

Wie oben erläutert sind Celluloseether besonders bevorzugte Filmbildner. Celluloseether können hergestellt werden durch Methylierung (→Methylcellulose), Ethylierung, Hydroxypropylierung, Acetylierung (→Celluloseacetat). Bevorzugte Celluloseether sind ausgewählt aus Ethylcellulose, Methylcellulose, Methylethylcellulose, Hydroxypropylcellulose, Hydroxypropylmethylcellulose, Carboxymethylcellulose (CMC), Celluloseacetat und Gemischen hiervon.

Ganz besonders bevorzugte Filmbildner sind Celluloseether ausgewählt aus Ethylcellulose, Methylcellulose, Methylethylcellulose, Hydroxypropylcellulose, Hydroxypropylmethylcellulose, Carboxymethylcellulose (CMC) und Gemischen hiervon. Celluloseether haben den Vorteil, dass sie Beschichtungsmittel besonders widerstandsfähig machen und vegan sind.

In einer besonders bevorzugten Ausführungsform enthält der Filmbildner mindestens zwei, insbesondere mindestens drei voneinander verschiedene Celluloseether. Die Cellulosederivate unterscheiden sich dabei strukturell voneinander. Vorteilhaft an der Verwendung von mindestens zwei verschiedenen Cellulosederivaten ist, dass mit ihnen auf der Oberfläche der Lebensmittel eine besonders wirksame Schutzschicht ausgebildet werden kann, die sie vor Austrocknung und äußeren Einflüssen schützt.

Besonders bevorzugt enthält der Filmbildner Hydroxypropylcellulose (HPMC) und Hydroxypropylmethylcellulose. Dabei enthält das Beschichtungsmittel in einer bevorzugten Ausführungsform Hydroxypropylcellulose (HPC) in einem Anteil von 1 Gew.% bis 10 Gew.% und Hydroxypropylmethylcellulose in einem Anteil von 0,1 Gew.% bis 10 Gew.%, vorzugsweise 0,5 Gew.% bis 5 Gew.%, jeweils bezogen auf das Gesamtgewicht des Beschichtungsmittels.

In einer weiteren bevorzugten Ausführungsform enthält das Beschichtungsmittel mindestens drei voneinander verschiedene Celluloseether, insbesondere Hydroxypropylcellulose (HPC), Hydroxypropylmethylcellulose und Ethylcellulose als Filmbildner. Dabei enthält das Beschichtungsmittel in einer bevorzugten Ausführungsform Hydroxypropylcellulose (HPC) in einem Anteil von 1 Gew.% bis 10 Gew.%, Hydroxypropylmethylcellulose in einem Anteil von 0,1 Gew.% bis 10 Gew.% und Ethylcellulose in einem Anteil von 1 Gew.% bis 15 Gew.% , jeweils bezogen auf das Gesamtgewicht des Beschichtungsmittels.

In einer bevorzugten Ausführungsform der Erfindung beträgt der Anteil an Filmbildner bezogen auf das Gesamtgewicht des Beschichtungsmittels von 0,05 Gew.% bis 25 Gew.%, bevorzugt von 1 Gew.% bis 20 Gew.%, noch bevorzugter von 1 Gew.% bis 15 Gew.%, insbesondere von 3 Gew.% bis 12 Gew.%, jeweils bezogen auf das Gesamtgewicht des Beschichtungsmittels.

In einer weiteren bevorzugten Ausführungsform der Erfindung beträgt der Anteil an Filmbildner ausgewählt aus der Gruppe bestehend aus Proteinen, bevorzugt pflanzlichen Proteinen, insbesondere Zein, Wachsen, bevorzugt Bienenwachs und Carnaubawachs, Harzen, bevorzugt Schellack, Polysacchariden, bevorzugt Gummi arabicum, Pektinen und Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon bezogen auf das Gesamtgewicht des Beschichtungsmittels von 0,05 Gew.% bis 25 Gew.% bevorzugt von 1 Gew.% bis 20 Gew.% noch bevorzugter von 1 Gew.% bis 15 Gew.%, insbesondere von 3 Gew.% bis 12 Gew.%, jeweils bezogen auf das Gesamtgewicht des Beschichtungsmittels.

In einer weiteren bevorzugten Ausführungsform der Erfindung beträgt der Anteil an Filmbildner ausgewählt aus der Gruppe bestehend aus Polysacchariden, bevorzugt Gummi arabicum, Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon bezogen auf das Gesamtgewicht des Beschichtungsmittels von 0,05 Gew.% bis 25 Gew.% bevorzugt von 1 Gew.% bis 20 Gew.% noch bevorzugter von 1 Gew.% bis 15 Gew.%, insbesondere von 3 Gew.% bis 12 Gew.%, jeweils bezogen auf das Gesamtgewicht des Beschichtungsmittels.

In einer weiteren bevorzugten Ausführungsform der Erfindung beträgt der Anteil an Filmbildner ausgewählt aus der Gruppe bestehend aus Polysacchariden, bevorzugt Gummi arabicum, Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon bezogen auf das Gesamtgewicht des Beschichtungsmittels von 0,05 Gew.% bis 25 Gew.%, bevorzugt von 1 Gew.% bis 20 Gew.% noch bevorzugter von 1 Gew.% bis 15 Gew.%, insbesondere von 3 Gew.% bis 12 Gew.%, jeweils bezogen auf das Gesamtgewicht des Beschichtungsmittels.

In einer weiteren bevorzugten Ausführungsform der Erfindung beträgt der Anteil an Filmbildner ausgewählt aus Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon bezogen auf das Gesamtgewicht des Beschichtungsmittels von 0,05 Gew.% bis 25 Gew.%, bevorzugt von 1 Gew.% bis 20 Gew.%, noch bevorzugter von 1 Gew.% bis 15 Gew.%, insbesondere von 3 Gew.% bis 12 Gew.%, jeweils bezogen auf das Gesamtgewicht des Beschichtungsmittels.

In einer weiteren bevorzugten Ausführungsform der Erfindung beträgt der Anteil an Filmbildner ausgewählt aus der Gruppe bestehend aus Ethylcellulose, Methylcellulose, Methylethylcellulose, Hydroxypropylcellulose, Hydroxypropylmethylcellulose, Carboxymethylcellulose (CMC) und Gemischen hiervon von 0,05 Gew.% bis 25 Gew.%, bevorzugt von 1 Gew.% bis 20 Gew.%, noch bevorzugter von 1 Gew.% bis 15 Gew.%, insbesondere von 3 Gew.% bis 12 Gew.%, jeweils bezogen auf das Gesamtgewicht des Beschichtungsmittels.

Bevorzugt weist der Filmbildner, insbesondere die Celluloseether, eine Viskosität von 150 cps bis 800 cps auf. Die Viskosität wird gemessen als Lösung in Wasser (10 Gew.%, 25°C).

### Komponente (C)

Erfindungsgemäß enthält das Beschichtungsmittel 50 Gew.% bis 98 Gew.%, vorzugsweise von 60 Gew.% bis 98 Gew.%, insbesondere von 60 Gew.% bis 80 Gew.%, bezogen auf das Gesamtgewicht des Beschichtungsmittels, Dispergier oder Lösemittel. Vorteilhaft gegenüber einem pulverförmigen Beschichtungsmittel ist eine bessere Applizierbarkeit und eine gleichmäßigere Verteilung. Bevorzugte Dispergier oder Lösemittel sind Wasser und/oder Alkohol, wie Ethanol, Isopropanol und Kombinationen hiervon. Besonders bevorzugt ist Alkohol, insbesondere Ethanol.

### Weitere Komponenten des Beschichtungsmittels (Komponente (D)

Das Beschichtungsmittel kann auch weitere Komponenten (Komponente (D)) enthalten.

So enthält das Beschichtungsmittel in einer Ausführungsform mindestens ein Öl und/oder mindestens einen Emulgator sowie optional Antioxidantien, Emulgatoren, Säuerungsmittel, Konservierungsmittel, Farben und/oder Aromen als Komponente (D). Dabei beträgt der Anteil der Komponente (D), falls vorhanden, vorzugsweise 0,01 Gew.% bis 6 Gew.%, besonders bevorzugt 0,01 Gew.% bis 5 Gew.%, jeweils bezogen auf das Gesamtgewicht des Beschichtungsmittels.

Bevorzugt ist das Öl ausgewählt aus Sonnenblumenöl, Rapsöl, Olivenöl und/oder MCT Öl. Weiter bevorzugt enthält das Beschichtungsmittel, falls vorhanden, das Öl in einer Menge von 1 Gew.% bis 5 Gew.%, bezogen auf das Gesamtgewicht des Beschichtungsmittels. Das Öl kann als Weichmacher fungieren. Weichmacher sind Stoffe, die die erhaltene Beschichtung weicher, flexibler, geschmeidiger und/oder elastischer machen.

Emulgatoren sind Hilfsstoffe, die nicht miteinander mischbare Flüssigkeiten zu einem fein verteilten Gemisch, der sogenannten Emulsion, vermengen und stabilisieren können. Bevorzugt ist der Emulgator ein in Wasser wirksamer Emulgator. Weiter bevorzugt enthält der Emulgator im Molekül eine wasserlösliche Teilstruktur (z. B. Polyol) sowie eine fettlösliche Teilstruktur (z. B. Fettalkohol und/oder Fettsäure).

Bevorzugte Emulgatoren sind ausgewählt aus Mono- und Diglyceriden von Speisefettsäuren, Polyglyceride von Speisefettäuren, Lecithine und Gemische hiervon. Weiter bevorzugt enthält das Beschichtungsmittel den Emulgator, falls vorhanden, in einer Menge von 1 Gew.% bis 5 Gew.%, bezogen auf das Gesamtgewicht des Beschichtungsmittels.

Das Beschichtungsmittel kann auch Zusatzstoffe wie Antioxidantien, Emulgatoren, Säuerungsmittel, Konservierungsmittel, Farben und/oder Aromen als Komponente (D) enthalten.

Falls vorhanden, enthält die erfindungsgemäße Zusammensetzung Zusatzstoffe, ausgewählt aus Antioxidantien, Emulgatoren, Säuerungsmittel, Konservierungsmittel, Farben und/oder Aromen in einer Menge von 0,01 Gew.% bis 6 Gew.%, besonders bevorzugt 0,01 Gew.% bis 5 Gew.% jeweils bezogen auf das Gesamtgewicht des Beschichtungsmittels.

In einer Ausführungsform ist das Beschichtungsmittel zur Beschichtung von Lebensmitteln geeignet. Insofern ist das Beschichtungsmittel in einer Ausführungsform vorzugweise so formuliert, dass es selbst ein Lebensmittel, entsprechend der Begriffserklärung in der US FDA 21 CFR 170.3(m), Stand 1. August 2023 ist. Ebenfalls bevorzugt ist das Beschichtungsmittel in einer Ausführungsform vorzugweise so formuliert, dass es ein Lebensmittel, entsprechend der Begriffserklärung in der Verordnung (EG) Nr. 178/2002 Artikel 2 ist.

Weiter bevorzugt sind sämtliche Komponenten des Beschichtungsmittels von der FDA am 1. August 2023 zugelassen und/oder könnten zugelassen werden.

Bevorzugte ausgeformte Lebensmittel sind ausgeformte Süßwaren. Dabei umfassen die ausgeformten Lebensmittel in einer Ausführungsform keine Backwaren, wie Muffins.

Süßwaren sind Produkte, die sich durch ihren vorwiegend süßen Geschmack auszeichnen. Süßwaren können jedoch auch saure oder andere Geschmackskomponenten aufweisen. Falls vorhanden, wird eine saure Geschmackskomponente meist durch eine nachträglich aufgebrachte Beschichtung erhalten. Wesentlicher und geschmackgebender Bestandteil ist Zucker und/oder Zuckeraustauschstoff, wobei außer Saccharose (Haushaltszucker) auch andere Zuckerarten wie Glucosesirup, Invertzucker, Traubenzucker oder Maltose verwendet werden können. Anstelle von Zucker oder zusätzlich zu ihm können auch sogenannte Zuckeraustauschstoffe wie Isomalt, Mannit, Sorbit oder Xylit und/oder Süßstoffe wie Acesulfam, Aspartam oder Saccharin enthalten sein. Süßwaren können auch Wirkstoffe enthalten, wie Vitamine, CBD, Mineralstoffe und andere pharmakologische und nahrungsergänzende Inhaltsstoffe.

Bevorzugte ausgeformte Süßwaren sind ausgewählt aus Gelee- und Gummierzeugnissen, insbesondere Fruchtgummis, Gummibonbons, Lakritze und Gemischen hiervon. In einer bevorzugten Ausführungsform enthalten die Süßwaren Wirkstoffe, insbesondere Vitamine, Melatonin, CBD und/oder Mineralstoffe.

Ein weiterer Gegenstand der Erfindung umfasst ein beschichtetes ausgeformtes Lebensmittel, vorzugsweise eine Süßware, die mit dem erfindungsgemäßen Verfahren hergestellt worden ist. Die Erfindung umfasst ferner ein ausgeformtes Lebensmittel, vorzugsweise eine Süßware, deren Oberfläche vorzugsweise zumindest teilweise mit einem Beschichtungsmittel, wie vorangehend und nachfolgend beschrieben beschichtet worden ist und das sich dadurch auszeichnet, dass es zumindest auf Teilen seiner Oberfläche mindestens eine Stärke, vorzugsweise ausgewählt aus einer natürlichen Stärke, einer physikalisch modifizierten Stärke und Gemischen hiervon, sowie mindestens einen Filmbildner aufweist, der keine Stärke ist, und wobei der Filmbildner ausgewählt ist aus der Gruppe bestehend aus Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

Bevorzugte Ausführungsformen des ausgeformten Lebensmittels, insbesondere im Bezug auf das Beschichtungsmittel, umfassen vorangehend und nachfolgend beschriebene Ausführungsformen mutatis mutandis.

Ein weiterer Gegenstand der Erfindung umfasst ein Beschichtungsmittel für die Beschichtung von ausgeformten Lebensmitteln, das besonders für das erfindungsgemäße Verfahren geeignet ist.

Das Beschichtungsmittel für die Beschichtung von ausgeformten Lebensmitteln umfasst die folgenden Komponenten (A), (B) und (C)
- (A): 1 Gew.% bis 15 Gew.%, vorzugsweise von 1 Gew.% bis 10 Gew.%, insbesondere 1 Gew.% bis 8 Gew.%, jeweils bezogen auf das Gesamtgewicht des Beschichtungsmittels, mindestens eine Stärke, vorzugsweise ausgewählt aus einer natürlichen Stärke, einer physikalisch modifizierten Stärke und Gemischen hiervon
- (B): 0,05 Gew.% bis 30 Gew.%, vorzugsweise von 0,05 Gew.% bis 25 Gew.%, noch bevorzugter von 1 Gew.% bis 20 Gew.%, noch bevorzugter von 1 Gew.% bis 15 Gew.%, insbesondere von 3 Gew.% bis 12 Gew.%, jeweils bezogen auf das Gesamtgewicht des Beschichtungsmittels, mindestens einen Filmbildner, ausgewählt aus der Gruppe bestehend aus Proteinen, insbesondere Zein, Harzen, insbesondere Schellack, Polysacchariden, insbesondere Gummi arabicum, Celluloseether, insbesondere Ethylcellulose, Methylcellulose, Methylethylcellulose, Hydroxypropylcellulose, Hydroxypropylmethylcellulose, Carboxymethylcellulose (CMC) und Gemischen hiervon;
- (C): 50 Gew.% bis 98 Gew.%, vorzugsweise von 60 Gew.% Gew.% bis 98 Gew.%, insbesondere von 60 Gew.% bis 80 Gew.%, jeweils bezogen auf das Gesamtgewicht des Beschichtungsmittels, Dispergier oder Lösemittel, wobei das Dispergier oder Lösemittel vorzugsweise Wasser und/oder Alkohol ist.

Bevorzugte Ausführungsformen des erfindungsgemäßen Beschichtungsmittels umfassen die vorangehend und nachfolgend beschriebenen Ausführungsformen, insbesondere die für das im erfindungsgemäßen Verfahren eingesetzte Beschichtungsmittel beschriebenen Ausführungsformen, mutatis mutandis.

So ist beispielsweise in einer bevorzugten Ausführungsform des erfindungsgemäßen Beschichtungsmittels der Filmbildner ausgewählt aus der Gruppe bestehend aus Celluloseether, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

In einer besonders bevorzugten Ausführungsform des erfindungsgemäßen Beschichtungsmittels enthält der Filmbildner mindestens zwei, insbesondere mindestens drei, voneinander verschiedene Celluloseether, insbesondere Hydroxypropylcellulose (HPMC) und Hydroxypropylmethylcellulose sowie gegebenenfalls Ethyllcellulose.

Natürliche Stärke ist besonders bevorzugt. Vorteilhaft an der Verwendung von natürlicher Stärke ist, dass sie besonders gut Feuchtigkeit aus dem ausgeformten Lebensmittel aufnehmen kann. Hierdurch kann ein Abtrocknen des Lebensmittels verbessert werden.

Ein weiterer Gegenstand der Erfindung umfasst die Verwendung eines Beschichtungsmittels umfassend die folgenden Komponenten (A), (B) und (C)
- (A): 1 Gew.% bis 15 Gew.%, vorzugsweise von 1 Gew.% bis 10 Gew.%, insbesondere von 1 Gew.% bis 8 Gew.%, bezogen auf das Gesamtgewicht des Beschichtungsmittels, mindestens eine Stärke, vorzugsweise ausgewählt aus einer natürlichen Stärke, einer physikalisch modifizierten Stärke und Gemischen hiervon
- (B): 0,05 Gew.% bis 30 Gew.%, , vorzugsweise von 0,05 Gew.% bis 25 Gew.%, noch bevorzugter von 1 Gew.% bis 20 Gew.%, noch bevorzugter von 1 Gew.% bis 15 Gew.%, insbesondere von 3 Gew.% bis 12 Gew.%, bezogen auf das Gesamtgewicht des Beschichtungsmittels, mindestens einen Filmbildner, ausgewählt aus der Gruppe bestehend aus Proteinen, insbesondere Zein, Harzen, insbesondere Schellack, Polysacchariden, insbesondere Gummi arabicum, Celluloseether, insbesondere Ethylcellulose, Methylcellulose, Methylethylcellulose, Hydroxypropylcellulose, Hydroxypropylmethylcellulose, Carboxymethylcellulose (CMC) und Gemischen hiervon;
- (C): 50 Gew.% bis 98 Gew.%, vorzugsweise von 60 Gew.% bis 98 Gew.%, insbesondere von 60 Gew.% bis 80 Gew.%, bezogen auf das Gesamtgewicht des Beschichtungsmittels, Dispergier oder Lösemittel, wobei das Dispergier oder Lösemittel vorzugsweise Wasser und/oder Alkohol ist,
für die Beschichtung von ausgeformten Lebensmitteln insbesondere von Süßwaren.

Bevorzugte Ausführungsformen der erfindungemäßen Verwendung umfassen die vorangehend und nachfolgend beschriebenen Ausführungsformen, insbesondere die für das im erfindungsgemäßen Verfahren eingesetzte und separat beschriebene Beschichtungsmittel beschriebenen Ausführungsformen, mutatis mutandis.

So ist beispielsweise in einer bevorzugten Ausführungsform der Filmbildner ausgewählt aus der Gruppe bestehend aus Celluloseether, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

In einer besonders bevorzugten Ausführungsform enthält der Filmbildner mindestens zwei, insbesondere mindestens drei, voneinander verschiedene Celluloseether, insbesondere Hydroxypropylcellulose (HPMC) und Hydroxypropylmethylcellulose sowie gegebenenfalls Ethyllcellulose.

Natürliche Stärke ist besonders bevorzugt. Vorteilhaft an der Verwendung von natürlicher Stärke ist, dass sie besonders gut Feuchtigkeit aus dem ausgeformten Lebensmittel aufnehmen kann. Hierdurch kann ein Abtrocknen des Lebensmittels verbessert werden.

Im folgenden wird die Erfindung anhand mehrerer nicht beschränkender Beispiele näher erläutert.

### Beispiel 1

Es wird eine fließfähige Lebensmittelgrundmasse, nämlich eine mit Zucker, Glukosesirup, Aromen und Farbstoff versetzte Gelatinemasse (Trockensubstanz 75%) in eine für Lebensmittel geeignete handelsübliche Silikonform zur Herstellung von Gummibärchen gefüllt. Die Silikonform weist auf der Oberfläche Sonnenblumenöl als Trennmittel auf. Die Gelatinemasse wird für 3 Tage bei 20°C gelagert und härtet und trocknet dabei aus.

Anschließend wird die gehärtete Gelatinemasse, die die Form von Gummibärchen angenommen hat, manuell ausgeformt und auf ihre Oberfläche eine Beschichtungsmittel der folgenden Zusammensetzung aufgetropft:
A): 10 Gew.%, bezogen auf das Gesamtgewicht des Beschichtungsmittels, Tapiokastärke
(B1): 7 Gew.%, bezogen auf das Gesamtgewicht Hydroxypropylcellulose
(B2): 5 Gew.%, bezogen auf das Gesamtgewicht Hydroxypropylmethylcellulose
(C1): 65 Gew.%, bezogen auf das Gesamtgewicht des Beschichtungsmittels Ethanol
(C2): 13 Gew.%, bezogen auf das Gesamtgewicht des Beschichtungsmittels Wasser.

Die Beurteilung des fertigen Produktes erfolgt visuell zum einen direkt nach der Herstellung zum anderen nach einem Lagertest in einem Wärmeschrank bei 30°C. Die Gummibärchen werden für die Wärmebehandlung in einem handelsüblichen ZIP Beutel gelagert. Es ist zu beobachten, dass die Oberfläche der Gummibärchen sowohl direkt nach der Herstellung als auch nach einer Lagerdauer von 1, 2, 3, und 4 Wochen ein mattes Aussehen hat. Die Gummibärchen sind gut konfektionier- und trennbar.

### Beispiel 2

Die Herstellung und Beurteilung erfolgt analog Beispiel 1.

Das Beschichtungsmittel weist folgende Zusammensetzung auf:
(A): 10 Gew.%, bezogen auf das Gesamtgewicht des Beschichtungsmittels, Tapiokastärke
(B1): 3 Gew.%, bezogen auf das Gesamtgewicht Hydroxypropylcellulose
(B2): 1 Gew.%, bezogen auf das Gesamtgewicht Hydroxypropylmethylcellulose
(B3) : 5 Gew.%, bezogen auf das Gesamtgewicht Ethyllcellulose
(C1): 68 Gew.%, bezogen auf das Gesamtgewicht des Beschichtungsmittels Ethanol
(C2): 13 Gew.%, bezogen auf das Gesamtgewicht des Beschichtungsmittels Wasser

Es ist zu beobachten, dass die Oberfläche der Gummibärchen sowohl direkt nach der Herstellung als auch nach einer Lagerdauer von 1, 2, 3, 4 Wochen ein mattes Aussehen hat. Die Gummibärchen sind gut konfektionier- und trennbar. Im Vergleich zu Beispiel 1 wurde gefunden, dass die Gummibärchen eine noch mattere Oberfläche aufweisen.

## Patentansprüche

1. Verfahren zur Herstellung von beschichteten ausgeformten Lebensmitteln, vorzugsweise von beschichteten ausgeformten Süßwaren, umfassend folgende Schritte:
I) Einbringen von Lebensmittelgrundmasse in formbarem Zustand in mindestens eine mit einem Trennmittel versehene Form;
II) Verfestigung oder Gelierung der Lebensmittelgrundmasse in der Form zu geformten Lebensmitteln;
III) Entformung der geformten Lebensmittel;
IV) zumindest teilweises Beschichten der Oberfläche der ausgeformten Lebensmittel mit einem Beschichtungsmittel umfassend die folgenden Komponenten (A), (B) und (C)
- (A): 1 Gew.% bis 15 Gew.%, bezogen auf das Gesamtgewicht des Beschichtungsmittels, mindestens eine Stärke,
- (B): 0,05 Gew.% bis 30 Gew.%, bezogen auf das Gesamtgewicht des Beschichtungsmittels, mindestens einen Filmbildner, der keine Stärke ist,
- (C): 50 Gew.% bis 98 Gew.%, bezogen auf das Gesamtgewicht des Beschichtungsmittels, Dispergier oder Lösemittel.

2. Verfahren nach Anspruch 1, **dadurch gekennzeichnet, dass** das Verfahren ein stärkefreies Formgebungsverfahren ist.

3. Verfahren nach Anspruch 1 oder 2, **dadurch gekennzeichnet, dass** die Stärke (A) ausgewählt aus einer natürlichen Stärke, einer physikalisch modifizierten Stärke und Gemischen hiervon ist.

4. Verfahren nach einem oder mehreren der vorangehenden Ansprüche, **dadurch gekennzeichnet, dass** die Form eine Dauerform ist.

5. Verfahren nach einem oder mehreren der vorangehenden Ansprüche, **dadurch gekennzeichnet, dass** das Trennmittel mindestens ein Öl, vorzugsweise mindestens ein pflanzliches Öl und/oder mindestens ein Wachs optional im Gemisch mit mindestens einem Fett aufweist.

6. Verfahren nach einem oder mehreren der vorangehenden Ansprüche, **dadurch gekennzeichnet, dass** der Filmbildner ausgewählt ist aus der Gruppe bestehend aus Proteinen, bevorzugt pflanzlichen Proteinen, insbesondere Zein, Wachsen, bevorzugt Bienenwachs und Carnaubawachs, Harzen, bevorzugt Schellack, Polysacchariden, bevorzugt Gummi arabicum, Pektinen und Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

7. Verfahren nach einem oder mehreren der vorangehenden Ansprüche, **dadurch gekennzeichnet, dass** der Filmbildner ausgewählt ist aus der Gruppe bestehend aus Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

8. Verfahren nach einem oder mehreren der vorangehenden Ansprüche, **dadurch gekennzeichnet, dass** der Filmbildner mindestens zwei, voneinander verschiedene Celluloseether, insbesondere Hydroxypropylcellulose (HPMC) und Hydroxypropylmethylcellulose, enthält.

9. Verfahren nach einem oder mehreren der vorangehenden Ansprüche, **dadurch gekennzeichnet, dass** das Beschichtungsmittel so formuliert ist, dass es selbst ein Lebensmittel, entsprechend der Begriffserklärung in der US FDA 21 CFR 170.3(m), Stand 1. August 2023 ist.

10. Verfahren nach einem oder mehreren der vorangehenden Ansprüche, **dadurch gekennzeichnet, dass** die ausgeformten Lebensmittel ausgeformte Süßwaren sind, ausgewählt aus Gelee- und Gummierzeugnissen, insbesondere Fruchtgummis, Gummibonbons, Lakritze und Gemischen hiervon.

11. Beschichtetes ausgeformtes Lebensmittel, vorzugsweise ausgeformte Süßware, vorzugsweise hergestellt mit einem Verfahren nach einem oder mehreren der Ansprüche 1 bis 10, wobei das ausgeformte Lebensmittel zumindest auf Teilen seiner Oberfläche mindestens eine Stärke sowie mindestens einen Filmbildner aufweist, der keine Stärke ist und wobei der Filmbildner ausgewählt ist aus der Gruppe bestehend aus, Celluloseethern, insbesondere Ethylcellulose, Methylcellulose, Methylethylcellulose, Hydroxypropylcellulose, Hydroxypropylmethylcellulose, Carboxymethylcellulose (CMC) und Gemischen hiervon.

12. Beschichtungsmittel für die Beschichtung von ausgeformten Lebensmitteln umfassend die folgenden Komponenten (A), (B) und (C)
(A): 1 Gew.% bis 15 Gew.%, bezogen auf das Gesamtgewicht des Beschichtungsmittels, mindestens eine Stärke;
(B): 0,05 Gew.% bis 30 Gew.%, bezogen auf das Gesamtgewicht des Beschichtungsmittels, mindestens einen Filmbildner, ausgewählt aus der Gruppe bestehend aus aus Proteinen, insbesondere Zein, Harzen, insbesondere Schellack, Polysacchariden, insbesondere Gummi arabicum, Celluloseether, insbesondere Ethylcellulose, Methylcellulose, Methylethylcellulose, Hydroxypropylcellulose, Hydroxypropylmethylcellulose, Carboxymethylcellulose (CMC) und Gemischen hiervon;
(C): 50 Gew.% bis 98 Gew.%, bezogen auf das Gesamtgewicht des Beschichtungsmittels, Dispergier oder Lösemittel, wobei das Dispergier oder Lösemittel vorzugsweise Wasser und/oder Alkohol ist.

13. Beschichtungsmittel nach Anspruch 12, **dadurch gekennzeichnet, dass** der Filmbildner wie in einem oder mehreren der Ansprüche 6 bis 8 definiert ist.

14. Beschichtungsmittel nach Anspruch 12 oder 13, **dadurch gekennzeichnet, dass** das Beschichtungsmittel so formuliert ist, dass es ein Lebensmittel, entsprechend der Begriffserklärung in der US FDA 21 CFR 170.3(m), Stand 1. August 2023 ist

15. Verwendung eines Beschichtungsmittels nach einem oder mehreren der Ansprüche 12 bis 14 für die Beschichtung von ausgeformten Lebensmitteln insbesondere von Süßwaren.
